# EUROPEAN PATENT SPECIFICATION

(11) **EP 0 548 192 B1**
(45) Date of publication and mention of the grant of the patent: **29.01.1997**
(21) Application number: 91916468.1
(22) Date of filing: 06.09.1991
(51) Int. Cl.: A01D 17/06, A01D 33/08

(54) **TUBER SEPARATOR**
KNOLLENSCHEIDER
SEPARATEUR DE TUBERCULES

(30) Priority: 13.09.1990 GB 9020037; 29.11.1990 GB 9025953
(43) Date of publication of application: 30.06.1993
(73) Proprietor: REEKIE MANUFACTURING LTD., Forfar, Tayside DD8 1UQ (GB)
(72) Inventor: SCOTT, James, Roy, Forfar Tayside DD8 1EQ (GB)
(74) Representative: Szczuka, Jan Tymoteusz
(86) International application number: GB9101519
(87) International publication number: WO9204816

(56) References cited:
- EP-A- 0 141 786
- DE-C- 875 424
- FR-A- 1 076 113
- FR-A- 1 147 032
- GB-A- 2 215 972
- US-A- 4 471 876

## Description

The present invention relates to a device suitable for use in separating potatoes or other tubers from stones, clods, haulm, weeds etc. which are inadvertently collected during harvesting, and more particularly to such a device which incorporates roller separators.

Roller separators generally have a series of pairs of counter rotating cleaning rollers, ususally of rubber or other resiliently deformable material, to allow "pull-through" of stones and other trash whilst minimizing damage to tubers, wherein one of said rollers has a plain surface and the other has a helical projection extending therefrom. The helical projections extending from end to end of the rollers are formed and arranged to advance tubers along the rollers and to break up dirt clumps and other debris.

Separators of the kind described above have been known for a number of years e.g. from U.S. Patent No. 3473658 Bartlett and U.S. Patent No. 2618385 Silver for use both in mobile applications as on harvesters in the field or in stationary applications for cleaning a crop of tubers prior to storage.

The efficiency of such known machines is effectively controlled by the rate of roller rotation, the angle of the helical projection thereon and the angle of inclination relative to the ground of the rollers and hence the effects of gravity on the crop being cleaned.

It will therefore be understood that a separator of the known kind in use in a field would be subject to variations in the inclination of the rollers both on uphill and downhill slopes with consequently significant effects on the efficiency of the separator.

Separators which can have the inclination of the rollers adjustable to suit traversal of the uphill or downhill slopes of a field are known from U.S. Patent No. 4471876 Stevenson, but these can only compensate for large general variations of roller inclination that may be experienced across a field. Constant manual and/or automatic adjustment of the roller inclination has been proposed but sufficient degree of angle variation has proved difficult to incorporate into separators effectively. Furthermore clods and stones on the rollers will tend to jump around and may not be fully separated from tubers, as well as tubers being possibly damaged by bouncing off rollers, stones and/or other tubers.

A separator having an overhead conveyor to effect all the conveying along a series of wire bar cleaning rollers is known from German Patent DE 875425 (Bannert). On the one hand though, the more or less corrugated surfaces of the rollers of Bannert give a very vigorous or "rough ride" to potatoes and can damage them. On the other hand the overhead conveyor leaves the potatoes substantially unconstrained allowing them to bounce over the rough rollers thereby leading to further damage.

It is an object of the present invention to avoid or minimise one or more of the above disadvantages.

The present invention provides a separator for use in separating tubers and the like from haulm clods, weeds, stones and the like collected during harvesting which separator comprises a plurality of elongate counter-rotating cleaning rollers which have first longitudinal end portions for receiving tubers loaded onto said rollers and second longitudinal end portions for discharging tubers from said rollers; and an overhead conveyor having a conveying run extending above said rollers from said first longitudinal end portions towards said second longitudinal end portions thereof, for engagement with tubers or the like disposed on said rollers, in use of the separator so as to impart drive thereto in a direction towards said second longitudinal end portions, whilst captively retaining said tubers between the overhead conveyor and said rollers, characterized in that said cleaning rollers are arranged in counter-rotating pairs which rotate towards one another when viewed from above for cleaning and separating, said rollers each having a generally smooth closed outer surface for co-operating with that of a paired counter-rotating roller for selectively pulling through thereinbetween, in use of the separator, said haulm, and the like; and in that said overhead conveyor captively retains said tubers or the like between said overhead conveyor and channels defined by said pairs of said counter-rotating rollers whereby in use of the separator tubers may be conveyed along said rollers at various angles of inclination of said rollers whilst being substantially restrained against movement other than along said rollers, and at a generally constant rate of conveyance.

Thus with a separator of the present invention tubers may be separated and to a large extent have removed therefrom haulm, clods, weed etc. in an effective and economical manner and especially so when used in harvesting apparatus on undulating and/or rough terrain. Moreover, with the separator of the present invention the rate at which the potatoes traverse the rollers of the cleaning table is made relatively independent of the angle of inclination (even where no provision at all is made for adjusting the angle of inclination of the cleaning table when traversing undulating terrain), thereby minimising any problems e.g. pile ups, arising from variations in the traverse rate. In addition tuber damage is substantially reduced by substantially restraining the tubers against bouncing etc. even when traversing rough terrain. Furthermore the speed of the overhead conveyor may readily be varied to speed up or slow down the rate of passage of the tubers over the cleaning table rollers as required e.g. to cater for variations in tuber feed rate, relative volume/density of detritus etc.

Preferably said rollers have a generally cylindrical outer body having a resiliently deformable covering thereon formed and arranged to grip irregular angular and/or thin shapes or objects such as stones, haulm, weeds etc. and pull them downwardly between the rollers thereby separating them from the tubers.

Preferably at least one of said first and second rollers has a helical rib extending from a said loading end portion to a said discharge end portion thereof and is formed and arranged for positively advancing tubers coming into contact therewith from the said loading end portion to the said discharge end portion, to a greater or lesser extent. It will be appreciated that the rate of movement of the tubers between said end portions will generally be largely dependent on the pitch of said helical rib and the rate of rotation of said rollers.

Preferably said plurality of pairs of rollers is mounted in a support framework, in a plane inclined slightly below the horizontal in a direction towards their discharge end portions with the axis of rotation of said rollers extending in the same direction as the movement of said tubers. The framework is desirably provided with level adjustment means formed and arranged to keep said rollers in said generally horizontal plane when the separator of the invention is crossing terrain which departs from the horizontal. Advantageously said level adjustment means may be formed and arranged for automatic operation to facilitate traversal of terrain with variable angles of slope without the need for repeated manual adjustment. It will be appreciated though that it is a particular advantage of the present invention that due to the substantially captive engagement of the tubers on the cleaning table rollers, it is possible to avoid the use of any level adjustment means entirely if desired, thereby simplifying construction and reducing manufacturing costs. Thus where no level adjustment is used the cleaning table may be disposed generally horizontally. Alternatively, if desired, the cleaning table could be inclined downwardly (in the downstream direction) if required to reduce the drop down to a subsequent conveyor.

The overhead conveyor may be of any suitable form which can engage and impart drive to, tubers disposed on said rollers. Preferably said conveyor comprises an endless conveyor mounted on at least two return guides, and provided with suitable drive means. Conveniently the guides are in the form of guide rollers at least one of which is provided with a said drive means formed and arranged for driving said endless conveyor. The endless conveyor may be of any suitable form which can more or less positively engage the tubers for imparting drive thereto. Thus the conveyor may be in the form of an endless belt having a surface of resiliently deformable material, such as an open or closed cell foam polymeric material, e.g. a rubber sponge-like material, to prevent excessive movement of the tubers. The use of such a resiliently deformable material helps reduce damage to said tubers during separation still further.

In another form of conveyor an endless belt or chain has mounted thereon a plurality of spaced apart paddles or flights, or a multipicity of fingers or bristles, projecting downwardly into close proximity to said separator rollers so as to generally define compartments in which tubers disposed on said rollers may be captively retained and thus carried forward therein as the conveyor advances.

It will be appreciated that whilst the overhead conveyor may conveniently be in the form of a single flexible endless conveyor elements extending along the separator rollers, it could alternatively be in the form of a series of element extending therealong e.g a series of generally cylindrical brushes all rotating in the same direction for successively sweeping the tubers along the separator rollers.

It will also be appreciated that the rate of flow of tubers over the rollers may be controlled by adjusting the speed of the drive means to said endless conveyor. Furthermore the rate of tuber flow through the separator may be maintained at a generally constant rate irrespective of the slope or roughness of the terrain without the problems of backing up of tubers and blockage of the separator when the separator rollers are tilted upwardly (in the downstream direction) so that the tubers roll back and/or their flow rate is reduced.

Preferably the conveyor is mounted above the rollers in such a way that its height above the separator rollers can be varied with the aid of suitable height adjustment means thereby to accommodate different sizes of tuber and to some extent control the variable transit time of tuber flow and the degree of separation.

Preferably the conveyor is provided with resilient biasing means formed and arranged for holding the conveying run of the conveyor down at a desired pre-determined height above the separator rollers whilst allowing transitory upward displacement thereof to pass over particularly large tubers, clods, stones or the like.

In another aspect of the present invention the belt assembly is mounted over the roller table in such a way that it can be readily adjusted in its height relative to the rollers to accommodate different sizes of crop and assist in controlling rate of crop flow and separation. The belt assembly is also mounted in such a way and is spring assisted to allow it to be adjusted to float lightly on the crop and also to float upwards to ride over large stones, clods or lumps of weed or haulm passing under it.

In a further aspect of the present invention provides a separating device comprising a frame with multiple pairs of contra-rotating, variable speed, spiral and plain rollers of rubber or similar resilient deformable material arranged with their axis in direction of material flow and including a further pair of rollers mounted on a separate frame above and transverse to the aforementioned rollers, fitted with a belt having a surface of rubber or other similar resiliently deformable material over its surface and arranged to be driven a variable speeds in either direction.

Preferably the belt has a series of fingers or flights of rubber or similar resiliently deformable material attached to its outer surface.

Preferably the belt is suspended on a linkage connected to an adjustment mechanism allowing the belt to be raised or lowered relative to the separating rollers to vary the gap between the deformable fingers on the belt and the rollers.

Preferably the adjustable linkage carrying the belt assembly is arranged whereby the belt assembly can float upwards to allow irregular material to pass freely between the separating rollers and the finger belt.

Preferably said separating device has a series of transverse shafts with extending resiliently deformable finger wheels mounted along their length to operate in place of said finger belt arrangement.

Preferably the complete assembly, including finger belt, pivoted at one end and the other end capable of being adjusted up or down either by hydraulic cylinder, electrically operated or hand operated screw to allow operating angle of rollers to be varied.

Preferably said separating device includes a variable flow control mechanism which controls flow of material over the separating rollers by variation of driven speed of the aforementioned flow control mechanism.

It will be appreciated that harvesting conditions in the field can vary very considerably, especially in relation to soil type, weather, moisture, haulm condition (state of decay etc.), crop size etc. This in turn will considerably influence the optimum dimensions of the various parts and their disposition. In practice it has been found that for harvesting tubers, the rollers should generally have an outside diameter of the order of 50 to 100, preferably from 75 to 90 mm, including where applicable any helical rib. The latter may conveniently have a depth of the order of 10 to 15 mm. In order to avoid excessive build up of mud on the rollers under adverse harvesting conditions, a scraper or doctor blade may conveniently be provided adjacent a plain conveyor roller for scraping mud excess therefrom.

Where a pintle belt is used this conveniently has flexible fingers with a length of from 30 to 60, e.g. about 45 mm. with a diameter of from 3 to 8, e.g. about 5 mm, disposed at a pitch of around 8 to 20, e.g. about 12 mm. The spacing between the tips of the fingers and the conveyor roller outside surface is conveniently adjustable within a range of from 20 to 60, e.g. 25 to 40 mm.

Further preferred features and advantages of the present invention will appear from the following detailed description given by way of example of some preferred embodiments illustrated with reference to the accompanying drawings in which:-
Fig. 1 is a side elevation of the separator of the invention; and
Fig. 2 is an end elevation of the discharge end of the separator in Fig. 1.

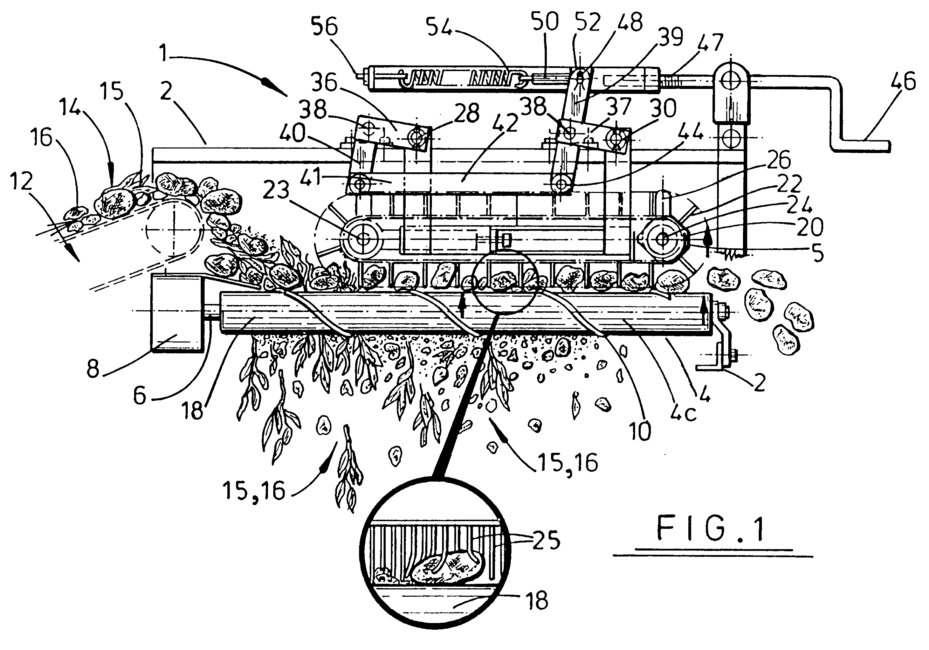

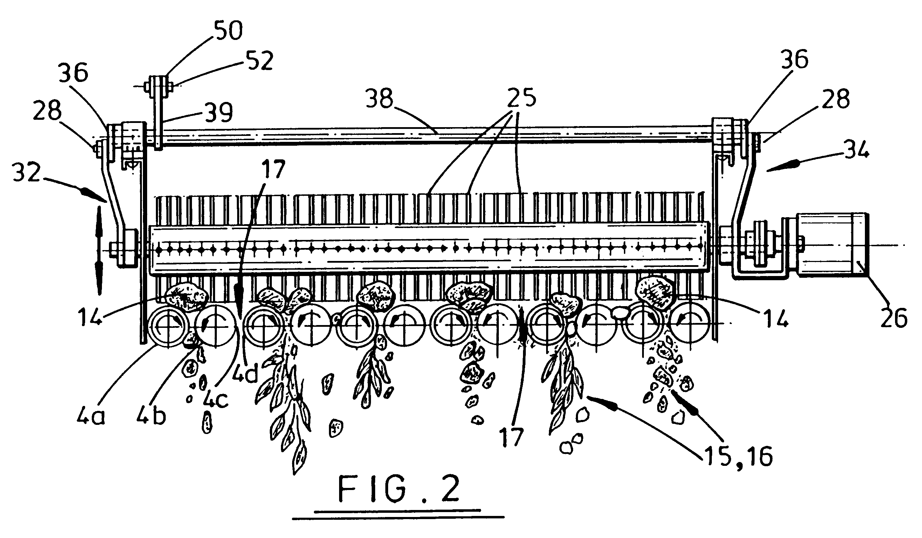

Fig. 1 shows a separator of the invention generally indicated by reference number 1. The separator 1 comprises a frame 2 on which are mounted six pairs of elongate counter-rotating cleaning rollers 4 via rotatable bearings 6. An overhead conveyor 5 is mounted above the rollers 4. A hydraulic motor 8 drives the rollers 4 such that the left hand roller 4a is rotated clockwise and the right hand roller 4b rotated counter-clockwise (see Fig.2). One, only, of each pair of the rollers has a helical rib in order to assist conveying of the tubers over the rollers whilst avoiding an excessive gap between the main roller surfaces to minimise pulling through of tubers by the rollers along with the unwanted detritus. In the illustrated embodiment, the left hand roller 4a of each pair of rollers 4 has a right handed helical rib 10 extending therefrom. A supply conveyor 12 loads a mixture of potatoes 14 along with other trash including haulms 15, stones 16 onto a loading end portion 18 of the rollers 4. The rotating helical rib 10 of each pair of rollers 4 drives the potatoes 14 into a channel 17 defined by the rollers 4a, 4b (See Fig. 2) and drives them towards the overhead conveyor 5.

The overhead conveyor 5 comprises an endless belt conveyor 20 mounted around two return rollers 23, 24, the rearmost roller 24 being provided with a hydraulic motor 26 to drive said conveyor 5. The endless belt conveyor 20 has a series of spaced apart paddles 22 mounted thereon, each of the paddles 22 being made up of a multiplicity of flexible fingers 25 of resilient rubber material or the like and formed and arranged so as to engage without causing damage said potatoes 14. The paddles 22 drive the potatoes 14, haulm 15 and stones 16 along the rollers 4 so as to be progressively separated with the trash being ejected downwardly through the separator roller pairs. Preferably the overhead endless belt conveyor is in the form of a pintle belt made up of a closely spaced array of flexible fingers 25 extending substantially across the whole belt as shown in the detail view. The fingers 25 are easily deformable to give way and bend around the tubers without damaging them whilst engaging them with sufficient force to apply to them a more or less positive driving force along the conveyors rollers 4. The overhead conveyor 5 is mounted to the separator frame 2 at a front pivot point 28 and a rear pivot point 30 on each spaced apart side 32, 34 of the frame 2 by a front suspension arm 36 and a rear suspension arm 37 which are interconnected side to side by shafts 38 across the separator 1. The front suspension arm 36 is connected via a front drop link 40 to the front end 41 of a beam 42. The rear suspension arm 37 is connected via a rear link 39 to the rear end 44 of said beam 42 which is mounted to the endless belt conveyor rollers 22, 24. The height of the conveyor 5 above the rollers 4 can be adjusted by an adjustment handle 46 having a threaded portion 47 which moves the position of the upper end 48 of the rear link 39 in a slotted link 50, bearing on a pin 52 so as to lift or lower the conveyor 5. Counter balance for the conveyor 5 is provided by a helical coil spring 54 which is provided with an eye bolt 56 for adjustment purposes.

In more detail and with reference to Fig. 2, the counter rotating rollers 4a, 4b define a channel 17 in which the potatoes 14 are rotated, any stones 16 or haulm 15 being grabbed by opposed downwardly turning roller faces 4c, 4d, drawn through thereby and then ejected downwardly below the rollers 4a, 4b. The rollers 4 are covered with a layer of resiliently deformable material such as rubber foam, preferably provided with a protective outer skin e.g. of a plastics material in generally known manner, so that the potatoes 14 are not damaged as they pass over them.

The rate of passage of potatoes 14 and the effectiveness of the separation and cleaning thereof is generally related to their transit time in the separator which can be controlled by varying the speed of the conveyor 20, thereby permitting greater control over cleaning efficiency than was previously possible. In general shorter transit times will increase the rate of processing by the separator but possibly with some loss of cleaning or separating efficiency. In addition higher conveyor speeds may increase the risk of damage through 'scrubbing' of the tuber surfaces. In addition by keeping the distance between the conveyor belt 20 and the roller 4 more or less closely similar to the size of potatoes passing therethrough, it is possible to minimise throwing around of the potatoes and thereby to minimise damage thereto.

It will be appreciated that the abovedescribed apparatus may be used with any generally rounded produce including various other root crops and other vegetables or fruit such as for example sugar beets, tomatoes, turnips, onions, certain types of larger carrots, and bulbs.

## Claims

1. A separator (1) for use in separating tubers (14) and the like from haulm (15) clods, weeds, stones (16) and the like collected during harvesting which separator (1) comprises a plurality of elongate counter-rotating cleaning rollers (4) which have first longitudinal end portions (18) for receiving tubers (14) loaded onto said rollers (4) and second longitudinal end portions for discharging tubers (14) from said rollers (4); and an overhead conveyor (5) having a conveying run extending above said rollers (4) from said first longitudinal end portions (18) towards said second longitudinal end portions thereof, for engagement with tubers (14) or the like disposed on said rollers (4), in use of the separator (1) so as to impart drive thereto in a direction towards said second longitudinal end portions, whilst captively retaining said tubers (14) between the overhead conveyor (5) and said rollers (4),
characterized in that said cleaning rollers (4) are arranged in counter-rotating pairs (4a, 4b) which rotate towards one another when viewed from above for cleaning and separating, said rollers (4) each having a generally smooth closed outer surface for co-operating with that of a paired counter-rotating roller (4) for selectively pulling through thereinbetween, in use of the separator (1), said haulm (15), and the like; and in that said overhead conveyor (5) captively retains said tubers (14) or the like between said overhead conveyor(5) and channels (17) defined by said pairs of said counter-rotating rollers (4a, 4b) whereby in use of the separator (1) tubers (14) are conveyed along said rollers (4) at various angles of inclination of said rollers (4) whilst being substantially restrained against movement other than along said rollers (4), and at a generally constant rate of conveyance.

2. A separator (1) as claimed in claim 1 wherein said rollers (4) have a cylindrical outer surface having a resiliently deformable covering thereon.

3. A separator (1) as claimed in claim 1 or claim 2 wherein at least one of the rollers (4a) of said pair of separating and cleaning rollers (4a, 4b) has a helical rib (10) extending along its outer surface from said first longitudinal end portion (18) to said second longitudinal end portion thereof for positively advancing tubers (14) therealong.

4. A separator (1) as claimed in any one of claims 1 to 3 wherein said overhead conveyor (5) is formed and arranged so as to have a tuber (14) or the like engagement surface in close proximity to said rollers (4) for substantially holding said tubers (14) or the like down on said rollers (4) in use of the separator (1).

5. A separator (1) as claimed in claim 4 wherein said overhead conveyor (5) comprises an endless conveyor (20) mounted on at least two return guides which guides are in the form of guide rollers (23, 24).

6. A separator (1) as claimed in claim 5 wherein at least one of said return guide rollers (24) is provided with drive means (26).

7. A separator (1) as claimed in claim 5 or claim 6 wherein said endless conveyor (20) is in the form of an endless belt having a surface of resiliently compressible material for localised compression upon engagement with a tuber (14) in use of the separator (1) thereby to grip and impart drive to tubers (14) disposed between a pair of said counter-rotating rollers (4a, 4b).

8. A separator (1) as claimed in any one of claims 4 to 7 wherein said overhead conveyor (5) is in the form of an endless belt having mounted thereon a plurality of spaced apart paddles (22) or flights for captively retaining tubers (14) between said pairs of counter-rotating rollers 4a, 4b and advancing said tubers (14) therealong in use of the separator (1).

9. A separator (1) as claimed in any one of claims 4 to 7 wherein said overhead conveyor (5) is in the form of an endless belt (20) having mounted thereon a multiplicity of fingers (25) or bristles for captively retaining tubers between said pairs of counter-rotating rollers (4a, 4b) and for advancing said tubers (14) therealong in use of the separator (1).

10. A separator (1) as claimed in claim 4 wherein said overhead conveyor (5) is in the form of a series of cylindrical conveyor elements having fingers (25) or the like extending therefrom for sweeping tubers (14) along between a pair of said separating and cleaning rollers (4a, 4b) in use of the separator (1).

11. A separator (1) as claimed in any one of claims 6, 7 and claim 8 or claim 9 when dependent on claim 6 wherein said drive means (26) is provided with variable speed control means for adjusting the rate of flow of tubers (14) along said separating and cleaning rollers (4).

12. A separator (1) as claimed in any one of claims 1 to 11 wherein said overhead conveyor (5) is mounted on a support frame (2) provided with variable height adjustment means (46) for adjusting the height of said conveyor (5) above the cleaning and separating and cleaning rollers (4).

13. A separator (1) as claimed in any one of claims 1 to 12 wherein said overhead conveyor (5) is provided with resilient biasing means (54) to allow transitory upward displacement thereof during traversing of large bodies on the separating and cleaning rollers (4) in use of the separator (1).

14. A separator (1) as claimed in any one of claims 1 to 13 wherein is provided a tuber (14) loading conveyor (12) formed and arranged for discharging tubers (14) in use of the separator (1), onto said first longitudinal end portions (18) of the separating and cleaning rollers (4) at a loading zone, and wherein said overhead conveyor (5) conveying run extends from part of said first longitudinal end portions (18) downstream of said loading zone.

## Patentansprüche

1. Scheider (1) zur Verwendung bei der Trennung von Knollen (14) und ähnlichem von Kartoffelkraut (15), Erdklumpen, Unkräutern, Steinen (16) und ähnlichem, die während des Erntens aufgenommen werden, wobei der Scheider (1) folgende Komponenten umfaßt: eine Vielzahl von länglichen gegenläufigen Reinigungswalzen (4), die in der Längsrichtung erste Endabschnitte (18) zur Aufnahme der Knollen (14), die auf diese Walzen (4) geladen werden, und in der Längsrichtung zweite Endabschnitte zur Abgabe der Knollen (14) von den Walzen (4) haben; und ein obenliegendes Fördermittel (5), das einen Förderstrang hat, der über den Walzen (4) von den in der Längsrichtung ersten Endabschnitten (18) zu deren in der Längsrichtung zweiten Endabschnitten verläuft, um während des Betriebs des Scheiders (1) mit den Knollen (14) oder ähnlichen, die sich auf den Walzen (4) befinden, in Berührung zu kommen, um diesen einen Antrieb in einer Richtung hin zu den in der Längsrichtung zweiten Endabschnitten zu geben, während die Knollen (14) zwischen dem obenliegenden Fördermittel (5) und den Walzen (4) festgehalten werden,
dadurch gekennzeichnet, daß die Reinigungswalzen (4) in gegenläufigen Paaren (4a, 4b) angeordnet sind, die, von oben gesehen, zum Reinigen und Trennen zueinander hin rotieren, wobei jede der Walzen (4) eine allgemein glatte, geschlossene Außenfläche zum Zusammenwirken mit derjenigen der paarig angeordneten gegenläufigen Walze (4) hat, um beim Betrieb des Scheiders (1) das Kartoffelkraut (15) und ähnliches selektiv zwischen diesen hindurchzuziehen; und daß das obenliegende Fördermittel (5) die Knollen (14) oder ähnliches fest zwischen dem obenliegenden Fördermittel (5) und Kanälen (17) hält, die durch die Paare der gegenläufigen Walzen (4a, 4b) gebildet werden, wodurch während des Betriebs des Scheiders (1) Knollen (14) bei verschiedenen Neigungswinkeln der Walzen (4) längs der Walzen (4) befördert werden, während sie im wesentlichen an jeder anderen Bewegung als der längs der Walzen (4) gehindert werden, und das mit einer im allgemeinen konstanten Fördergeschwindigkeit.

2. Scheider (1) nach Anspruch 1, bei dem die Walzen (4) eine zylindrische Außenfläche haben, auf der sich eine elastisch verformbare Ummantelung befindet.

3. Scheider (1) nach Anspruch 1 oder Anspruch 2, bei dem wenigstens eine der Walzen (4a) des Paares von Trenn- und Reinigungswalzen (4a, 4b) eine spiralförmige Rippe (10) hat, die von dem in der Längsrichtung ersten Endabschnitt (18) über deren Außenfläche zu deren in der Längsrichtung zweitem Endabschnitt verläuft, um darauf die Knollen (14) positiv vorwärts zu bewegen.

4. Scheider (1) nach einem der Ansprüche 1 bis 3, bei dem das obenliegende Fördermittel (5) so gebildet und angeordnet wird, daß es eine Berührungsfläche für die Knollen (14) oder ähnliches in enger Nachbarschaft und den Walzen (4) hat, um die Knollen (14) oder ähnliches beim Betrieb des Scheiders (1) im wesentlichen unten auf den Walzen (4) zu halten.

5. Scheider (1) nach Anspruch 4, bei dem das obenliegende Fördermittel (5) einen Endlosförderer (20) umfaßt, der auf wenigstens zwei Umlenkführungen aufgebracht ist, wobei die Führungen die Form von Führungswalzen (23, 24) haben.

6. Scheider (1) nach Anspruch 5, bei dem wenigstens eine der Umlenk-Führungswalzen (24) mit einem Antriebsmittel (26) versehen ist.

7. Scheider (1) nach Anspruch 5 oder Anspruch 6, bei dem der Endlosförderer (20) die Form eines Endlosbandes hat, das eine Oberfläche aus elastisch zusammendrückbarem Material hat, um während des Betriebs des Scheiders (1) nach der Berührung mit einer Knolle (14) Örtlich zusammengedrückt werden zu können, um dadurch die Knollen (14), die sich zwischen einem Paar der gegenläufigen Walzen (4a, 4b) befinden, zu fassen und ihnen einen Antrieb zu verleihen.

8. Scheider (1) nach einem der Ansprüche 4 bis 7, bei dem das obenliegende Fördermittel (5) die Form eines Endlosbandes hat, auf dem eine Vielzahl von im Abstand zueinander angeordneten Paddeln (22) oder Mitnehmern angebracht ist, um die Knollen (14) fest zwischen den Paaren der gegenläufigen Walzen (4a, 4b) zu halten und die Knollen (14) beim Betrieb des Scheiders (1) längs derselben vorwärts zu bewegen.

9. Scheider (1) nach einem der Ansprüche 4 bis 7, bei dem das obenliegende Fördermittel (5) die Form eines Endlosbandes (20) hat, auf dem eine Vielzahl von Fingern (25) oder Borsten angebracht ist, um die Knollen fest zwischen den Paaren der gegenläufigen Walzen (4a, 4b) zu halten und die Knollen (14) beim Betrieb des Scheiders (1) längs derselben vorwärts zu bewegen.

10. Scheider (1) nach Anspruch 4, bei dem das obenliegende Fördermittel (5) die Form einer Reihe von zylindrischen Förderelementen hat, die Finger (25) oder ähnliches haben, die von diesen ausgehen, um beim Betrieb des Scheiders (1) Knollen (14) zwischen einem Paar der Trenn- und Reinigungswalzen (4a, 4b) durchlaufen zu lassen.

11. Scheider (1) nach einem der Ansprüche 6, 7 und Anspruch 8 oder Anspruch 9 in Abhängigkeit von Anspruch 6, bei dem das Antriebsmittel (26) mit einem drehzahlveränderlichen Steuerungsmittel zur Regelung der Geschwindigkeit der Bewegung der Knollen (14) längs der Trenn- und Reinigungswalzen (4) versehen ist.

12. Scheider (1) nach einem der Ansprüche 1 bis 11, bei dem das obenliegende Fördermittel (5) auf einem Stützrahmen (2) angebracht ist, der mit einem höhenverstellbaren Mittel (46) zur Einstellung der Höhe des Fördermittels (5) über den Reinigungs- und Trennwalzen (4) versehen ist.

13. Scheider (1) nach einem der Ansprüche 1 bis 12, bei dem das obenliegende Fördermittel (5) mit einem elastischen Ausgleichsmittel (54) versehen ist, um eine vorübergehende Aufwärtsverschiebung desselben zu ermöglichen, wenn beim Betrieb des Scheiders (1) große Körper auf den Trenn- und Reinigungswalzen (4) bewegt werden.

14. Scheider (1) nach einem der Ansprüche 1 bis 13, bei dem ein Ladefördermittel (12) für die Knollen (14) vorgesehen ist, das so ausgeführt und angeordnet ist, daß es beim Betrieb des Scheiders (1) in einer Ladezone Knollen (14) auf die in der Längsrichtung ersten Endabschnitte (18) der Trenn- und Reinigungswalzen (4) abgibt, und bei dem der Förderstrang des obenliegende Fördermittels (5) von einem Teil der in der Längsrichtung ersten Endabschnitte (18) von der Ladezone stromabwärts reicht.

## Revendications

1. Séparateur (1) utilisé pour séparer des tubercules (14) ou similaire du chaume (15), des mottes de terre, des mauvaises herbes, des pierres (16) et similaire, collectées au cours de la récolte, ce séparateur (1) comprenant plusieurs rouleaux de nettoyage allongés à rotation opposée (4), avec des premières parties d'extrémité longitudinales (18) destinées à recevoir les tubercules (14) chargées sur lesdits rouleaux (4), et des deuxièmes parties d'extrémité longitudinales pour décharger les tubercules (14) desdits rouleaux (4); et un convoyeur suspendu (5) avec une course de transport s'étendant au-dessus desdits rouleaux (4), desdites premières parties d'extrémité longitudinales (18) vers lesdites deuxièmes parties d'extrémité longitudinales, pour s'engager dans les tubercules (14) ou similaire se trouvant sur lesdits rouleaux (4), lors de l'utilisation du séparateur (1), pour les entraîner dans une direction allant vers lesdites deuxièmes parties d'extrémité longitudinales, tout en retenant et captant lesdits tubercules (14) entre le convoyeur suspendu (5) et lesdits rouleaux (4),
caractérisé en ce que lesdits rouleaux de nettoyage (4) sont agencés par paires à rotation opposée (4a, 4b), tournant les uns en direction des autres, vus d'en haut, en vue du nettoyage et de la séparation, lesdits rouleaux (4) comportant chacun une surface externe à fermeture généralement lisse, pour coopérer avec celle d'une paire de rouleaux à rotation opposée (4), pour faire sortir sélectivement entre ceux-ci, lors de l'utilisation du séparateur (1), le chaume (15) et similaire; et en ce que ledit convoyeur suspendu (5) retient et capte lesdits tubercules (14) ou similaire entre ledit convoyeur suspendu (5) et des canaux (17), définis par lesdites paires desdits rouleaux à rotation opposée (4a, 4b), les tubercules (14) pouvant ainsi être transportés lors de l'utilisation du séparateur (1) le long desdits rouleaux (4) à des angles d'inclinaison différents desdits rouleaux (4), tout en étant pratiquement empêches de se déplacer autrement que le long desdits rouleaux (4), avec une vitesse de transport généralement constante.

2. Séparateur (1) selon la revendication 1, dans lequel lesdits rouleaux (4) ont une surface cylindrique externe comportant une couverture à déformation élastique.

3. Séparateur (1) selon les revendications 1 ou 2, dans lequel au moins un des rouleaux (4a) de ladite paire de rouleaux de séparation et de nettoyage (4a, 4b) comporte une nervure hélicoïdale (10), s'étendant le long de sa surface externe, de ladite première partie d'extrémité longitudinale (18) vers ladite deuxième partie d'extrémité longitudinale, en vue d'une avance positive des tubercules (14) le long de ceux-ci.

4. Séparateur (1) selon l'une quelconque des revendications 1 à 3, dans lequel ledit convoyeur suspendu (5) est formé et agencé de sorte à comporter une surface d'engagement des tubercules (14) ou similaire à proximité étroite desdits rouleaux (4), pour maintenir pratiquement lesdits tubercules (14) ou similaire sur lesdits rouleaux (4) pendant l'utilisation du séparateur (1).

5. Séparateur (1) selon la revendication 4, dans lequel ledit convoyeur suspendu (5) comprend un convoyeur sans fin (20) monté sur au moins deux guides de retour, ces guides ayant la forme de rouleaux de guidage (23, 24).

6. Séparateur (1) selon la revendication 5, dans lequel au moins un desdits rouleaux de guidage de retour (24) comporte un moyen d'entraînement (26).

7. Séparateur (1) selon les revendications 5 ou 6, dans lequel ledit convoyeur sans fin (20) a la forme d'une courroie sans fin ayant une surface en un matériau à compression élastique en vue d'une compression localisée lors de l'engagement dans un tubercule (14), lors de l'utilisation du séparateur (1), pour saisir ainsi les tubercules (14) se trouvant entre une paire desdits rouleaux à rotation opposée (4a, 4b) et les entraîner.

8. Séparateur (1) selon l'une quelconque des revendications 4 à 7, dans lequel ledit convoyeur suspendu (5) a la forme d'une courroie sans fin, sur laquelle sont montées plusieurs pales (22) ou spires espacées, pour retenir et capter les tubercules (14) entre lesdites paires de rouleaux à rotation opposée 4a, 4b et faire avancer lesdits tubercules (14) le long de ceux-ci lors de l'utilisation du séparateur (1).

9. Séparateur (1) selon l'une quelconque des revendications 4 à 7, dans lequel ledit convoyeur suspendu (5) a la forme d'une courroie sans fin (20) sur laquelle sont montés des doigts multiples (25) ou des poils pour retenir et capter les tubercules entre lesdites paires de rouleaux à rotation opposée (4a, 4b) et pour faire avancer lesdits tubercules (14) le long de ceux-ci lors de l'utilisation du séparateur (1).

10. Séparateur (1) selon la revendication 4, dans lequel ledit convoyeur suspendu (5) a la forme d'une série d'éléments de transfert cylindriques comportant des doigts (25) ou des éléments similaires, s'étendant à partir de ceux-ci pour balayer les tubercules (14) le long d'une paire desdits rouleaux de séparation et de nettoyage (4a, 4b) lors de l'utilisation du séparateur (1).

11. Séparateur (1) selon l'une quelconque des revendications 6, 7 et selon les revendications 8 ou 9, dans la mesure où elles dépendant de la revendication 6, dans lequel ledit moyen d'entraînement (26) comporte un moyen de commande à vitesse variable pour ajuster la vitesse d'écoulement des tubercules (14) le long desdits rouleaux de séparation et de nettoyage (4).

12. Séparateur (1) selon l'une quelconque des revendications 1 à 11, dans lequel ledit convoyeur suspendu (5) est monté sur un cadre de support (2), comportant un moyen d'ajustement à hauteur variable (46) pour ajuster la hauteur dudit convoyeur (5) au-dessus des rouleaux de nettoyage et de séparation (4).

13. Séparateur (1) selon l'une quelconque des revendications 1 à 12, dans lequel ledit convoyeur suspendu (5) comporte un moyen poussoir élastique (54) pour permettre un déplacement ascendant transitoire de celui-ci au cours de la traversée de corps de grandes dimensions sur les rouleaux de séparation et de nettoyage (4) lors de l'utilisation du séparateur (1).

14. Séparateur (1) selon l'une quelconque des revendications 1 à 13, comportant un convoyeur de chargement (12) des tubercules (14), formé et agencé de sorte à décharger les tubercules (14) lors de l'utilisation du séparateur (1) sur lesdites premières parties d'extrémité longitudinales (18) des rouleaux de séparation et de nettoyage (4) au niveau d'une zone de chargement, ladite course de transport dudit convoyeur suspendu (5) s'étendant d'une partie desdites premières parties d'extrémité longitudinales (18) vers l'aval de ladite zone de chargement.
